(19) Europäisches Patentamt

European Patent Office

Office européen des brevets

(11) **EP 1 044 706 A2**

(12) **EUROPEAN PATENT APPLICATION**

(43) Date of publication:
**18.10.2000 Bulletin 2000/42**

(51) Int Cl.⁷: **A63F 13/10**

(21) Application number: **00303189.5**

(22) Date of filing: **14.04.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **15.04.1999 JP 10848399**<br>      **15.03.2000 JP 2000073049**<br><br>(71) Applicant: **Sony Computer Entertainment Inc.**<br>**Tokyo 107-0052 (JP)** | (72) Inventors:<br>• **Ohori, Yasuhiro**<br>  **Shinjuku-ku, Tokyo 169-0073 (JP)**<br>• **Oota, Kotaro**<br>  **Shinjuku-ku, Tokyo 169-0073 (JP)**<br>• **Kaneko, Takahiro, Contrail Inc.**<br>  **Nakano-ku, Tokyo 164-0011 (JP)**<br><br>(74) Representative: **Horner, David Richard**<br>**D Young & Co,**<br>**21 New Fetter Lane**<br>**London EC4A 1DA (GB)** |

(54) **Entertainment system, entertainment apparatus, recording medium, and program**

(57)     An entertainment system (10) has a display monitor (18) for displaying a virtual field (200), a boundary line displaying means (302) for displaying a boundary line image (202) which virtually crosses the virtual field (200) and divides the virtual field (200) into a plurality of minor fields (204), a block developing means (304) for developing a plurality of block images (B1, B2) in the minor fields (204), and a block changing means (306) for changing at least one of the displayed block images (B1, B2) according to a predetermined rule in at least two stages. The block changing means (306) develops the block images (B1, B2) in the virtual field (200) in one of the stages.

FIG. 13

**Description**

BACKGROUND OF THE INVENTION

Field of the Invention:

The present invention relates to an entertainment system for executing various programs to allow the user to play various games such as a competition game, etc., an entertainment apparatus for executing various programs, a recording medium storing programs for allowing the user to play various games such as a competition game, etc., and a program itself.

Description of the Related Art:

Some entertainment systems having entertainment apparatus which include video game machines execute a game according to a game program which is read from a recording medium such as a CD-ROM or the like under the control of a manual controller while game images are being displayed on the display screen of a television receiver based on data read from the recording medium.

The entertainment apparatus and the manual controller are usually connected to each other by serial interfaces. When a clock signal is sent from the entertainment apparatus to the manual controller, the manual controller sends key switch information corresponding to manual input actions of the user in synchronism with the clock signal.

Recently, there has been developed and used a manual controller incorporating a vibration generating mechanism for imparting vibrations to the user in response to a request from an external drive, for example, the entertainment apparatus. While a game is in progress on the entertainment apparatus, various vibrations corresponding to manual input actions of the user are generated and imparted to the user.

There has been proposed and marketed a video game in which a plurality of block images are displayed on a display monitor, and when a certain condition is satisfied by a manual input action of the user, one or more displayed block images are eliminated. The user plays the game in order to compete for a higher speed at which to eliminate displayed block images.

However, the game of the type described above tends to be too simple in its development and boring to the user because the displayed block images change in one pattern only, i.e., are eliminated from display.

SUMMARY OF THE INVENTION

Embodiments of the present invention preferably provide an entertainment system, an entertainment apparatus, a recording medium, and a program which allow the user to enjoy various patterns in which displayed block images change, and which, if applied to play a game, allow the user to enjoy various game developments while the game is being played.

Embodiments of the present invention preferably also provide an entertainment system, an entertainment apparatus, a recording medium, and a program which, if applied to play a game, additionally allow the user to enjoy unexpected game developments while the game is being played.

Embodiments of the present invention preferably also provide an entertainment system, an entertainment apparatus, a recording medium, and a program which, if applied to play a game, additionally allow the user to output a message to a display monitor while the game is being played, thus making game developments interesting.

An entertainment system according to a first aspect of the present invention has a display monitor for displaying a virtual field and a plurality of block images developed in the virtual field, and block changing means for changing at least one of the displayed block images according to a predetermined rule in at least two stages, the block changing means comprising means for developing the block images in the virtual field in one of the stages.

Viewed from a further aspect, an entertainment apparatus is provided allowing a display monitor to be connected, the display monitor displaying a virtual field and a plurality of block images developed in the virtual field, comprising block changing means for changing at least one of the displayed block images according to a predetermined rule in at least two stages, the block changing means comprising means for developing the block images in the virtual field in one of the stages.

A recording medium according to one aspect of the present invention stores a program comprising the steps of displaying a virtual field on a display monitor and a plurality of block images developed in the virtual field, and changing at least one of the displayed block images according to a predetermined rule in at least two stages, with the block images being developed in the virtual field in one of the stages.

According to a further aspect of the present invention, a program readable and executable by a computer for use in an entertainment apparatus to which a manual controller for outputting a manual control request from the user and a display monitor for displaying images can be connected, has the step of changing at least one of a plurality of blocks developed in a virtual field displayed on the display monitor, according to a predetermined rule in at least two stages, with the block images being developed in the virtual field in one of the stages.

In this manner, a plurality of blocks are developed in the virtual field, and at least one of the developed block images is changed according to the predetermined rule. Since the block images are changed in two stages, the user can enjoy many changes of the block images. If the present invention is applied to the execution of a game, then the user can enjoy various developments of the game.

The block changing means may comprise means for developing the block images in the virtual field by introducing the block images into the virtual field.

The predetermined rule may include a condition to be satisfied in which of block images of different types developed in the virtual field, block images of at least one of the same types are positioned adjacent to each other, or a condition to be satisfied in which a manual input action for inhibiting the block images from being changed is not entered.

The block changing means may comprise means for changing the displayed block images by eliminating displayed block images. When the displayed block images are eliminated, remaining block images are preferably rearranged into new arrays of block images, and the elimination of new block images from the new arrays of block images is defined as a chain, and the block changing means may comprise means for changing a ratio at which differently changing block images are developed in the virtual field, depending on at least the number of chains.

The block changing means may comprise means for changing the displayed block images by making less visible the displayed block images.

According to a further aspect of the present invention, an entertainment system comprises a display monitor for displaying a virtual field, and boundary line displaying means for displaying a boundary line image which virtually crosses the virtual field.

According to another aspect of the present invention, an entertainment apparatus is provided allowing a display monitor to be connected, the display monitor displaying a virtual field, comprising boundary line displaying means for displaying a boundary line image which virtually crosses the virtual field.

According to a further aspect of the present invention, a recording medium stores a program comprising the step of displaying a virtual field on a display monitor and a boundary line image which virtually crosses the virtual field.

According to a still further aspect of the present invention, a program readable and executable by a computer for use in an entertainment apparatus to which a manual controller for outputting a manual control request from the user and a display monitor for displaying images can be connected, has the step of displaying a virtual field on the display monitor and a boundary line image which virtually crosses the virtual field.

The boundary line image which virtually crosses the virtual field is displayed on the display monitor. Since the boundary line image is virtually displayed, the boundary line can be moved as desired in the virtual field. If the present invention is applied to the execution of a game with a boundary line included in its images, the user can enjoy unexpected developments of the game.

The boundary line displaying means may comprise means for moving the boundary line image when a predetermined condition is satisfied, or the step of displaying a boundary line image may comprise the step of moving the boundary line image when a predetermined condition is satisfied. A distance by which the boundary line image moves may be changed depending on the extent to which the condition is achieved.

According to another aspect of the present invention, an entertainment system comprises a display monitor for displaying a virtual field, boundary line displaying means for displaying a boundary line image which virtually crosses the virtual field and divides the virtual field into a plurality of minor fields, block developing means for developing a plurality of block images in the minor fields, and block changing means for changing at least one of the displayed block images according to a predetermined rule in at least two stages, the block changing means comprising means for developing the block images in the virtual field in one of the stages.

According to a further aspect of the present invention, an entertainment apparatus is provided allowing a display monitor to be connected, the display monitor displaying a virtual field, comprising boundary line displaying means for displaying a boundary line image which virtually crosses the virtual field and divides the virtual field into a plurality of minor fields, block developing means for developing a plurality of block images in the minor fields, and block changing means for changing at least one of the displayed block images according to a predetermined rule in at least two stages, the block changing means comprising means for developing the block images in the virtual field in one of the stages.

According to a still further aspect of the present invention, a recording medium stores a program comprising the steps of displaying a virtual field and a boundary line image which virtually crosses the virtual field and divides the virtual field into a plurality of minor fields, developing a plurality of block images in the minor fields, and changing at least one of the displayed block images according to a predetermined rule in at least two stages, with the block images being developed in the virtual field in one of the stages.

According to another aspect of the present invention, a program readable and executable by a computer for use in an entertainment apparatus to which a manual controller for outputting a manual control request from the user and a display monitor for displaying images can be connected, has the steps of displaying a virtual field and a boundary line image which virtually crosses the virtual field and divides the virtual field into a plurality of minor fields, developing a plurality of block images in the minor fields, and changing at least one of the displayed block images according to a predetermined rule in at least two stages, with the block images being developed in the virtual field in one of the stages.

The user can enjoy various changes of the block images. If the present invention is applied to the execution of a game, the user can enjoy various developments of the game. Since the boundary line image is virtually displayed, the boundary line can be moved as desired in the virtual field. If the present invention is applied to the execution of a game with a boundary line included in its images, the user can enjoy unexpected developments of the game.

The block changing means may comprise means for developing the block images in the virtual field by introducing the block images into the virtual field.

The predetermined rule may include a condition to be satisfied in which of block images of different types developed in the virtual field, block images of at least one of the same types are positioned adjacent to each other, or a condition to be satisfied in which a manual input action for inhibiting the block images from being changed is not entered.

The block changing means may comprise means for changing the displayed block images by eliminating displayed block images. When the displayed block images are eliminated, remaining block images are preferably rearranged into new arrays of block images, and the elimination of new block images from the new arrays of block images is defined as a chain, and the block changing means may comprise means for changing a ratio at which differently changing block images are developed in the virtual field, depending on at least the number of chains.

The block changing means may comprise means for changing the displayed block images by making less visible the displayed block images.

The boundary line displaying means may comprise means for moving the boundary line image when a predetermined condition is satisfied, or the step of displaying a boundary line image may comprise the step of moving the boundary line image when a predetermined condition is satisfied. A distance by which the boundary line image moves may be changed depending on the extent to which the condition is achieved.

According to another aspect of the present invention, an entertainment system comprises a display monitor for displaying a virtual field, and message outputting means for displaying a message depending on a manual input action in or out of displayed the virtual field.

According to a further aspect of the present invention, an entertainment apparatus is provided allowing a display monitor to be connected, the display monitor displaying a virtual field, comprising message outputting means for displaying a message depending on a manual input action in or out of displayed the virtual field.

According to a still further aspect of the present invention, a recording medium stores a program comprising the steps of displaying a virtual field on a display monitor, and displaying a message depending on a manual input action in or out of displayed the virtual field.

If the present invention is applied to the execution of a game, then during the game, the user can output messages to the display monitor, adding an element of fun to game developments.

The message outputting means may comprise means for displaying the message in a manner to be uttered by character images displayed in or out of the virtual field, or the step of displaying a message may comprise the step of displaying the message in a manner to be uttered by character images displayed in or out of the virtual field.

At the same time the message is displayed, the character images may be animated, or the message may be outputted as sound.

BRIEF DESCRIPTION OF THE DRAWINGS

The present invention will be described further, by way of example only, with reference to preferred embodiments thereof as illustrated in the accompanying drawings, in which:

FIG. 1 is a perspective view of an entertainment system incorporating an entertainment apparatus according to an embodiment of the present invention;
FIG. 2 is a perspective view of a manual controller;
FIG. 3 is a plan view of the manual controller;
FIG. 4 is a perspective view showing the manner in which the manual controller is used;
FIG. 5 is a bottom view, partly broken away, of the manual controller, showing vibration imparting mechanisms disposed respectively in first and second grips;
FIG. 6 is a block diagram of a circuit arrangement of the entertainment apparatus;
FIG. 7 is a block diagram of components for carrying out bidirectional serial communications between the manual controller and the entertainment apparatus;
FIG. 8 is a functional block diagram of a game executing means which operates on the entertainment apparatus;
FIG. 9 is a view of a game image which is displayed by a display monitor when the game executing means is activated;
FIGS. 10A and 10B are views of displayed images showing the manner in which blocks are dropped when a △ button of the manual controller is pressed;
FIGS. 10C and 10D are views of displayed images showing a first chain;
FIG. 10E is a view of a displayed image showing a second chain;
FIG. 10F is a view of a displayed image showing a third chain;
FIG. 11 is a view of a game image showing the manner in which a chain is generated across a boundary;

FIGS. 12A through 12C are views of displayed images showing how blocks change when stone eggs are present;

FIG. 13 is a view of a game image showing the manner in which a boundary moves at the same time stone eggs are put into a minor field;

FIG. 14A is a view of a game image showing the manner in which a number of hearts are sent from a game character to the minor field of an opponent game character;

FIG. 14B is a view of a game image showing the manner in which some of the blocks in the minor field of the opponent game character have changed due to the sent hearts;

FIG. 15A is a view of a game image showing the manner in which a breath having a cooling effect is given from a game character;

FIG. 15B is a view of a game image showing the manner in which some of the blocks in the minor field of the opponent game character have changed due to the given breath;

FIG. 16A is a view of a game image showing the manner in which a strong wind is blown from a game character;

FIG. 16B is a view of a game image showing the manner in which some of the blocks in the minor field of the opponent game character have changed due to the strong wind;

FIG. 17A is a view of a game image showing the manner in which a strong flame is ejected from a game character;

FIG. 17B is a view of a game image showing the manner in which some of the blocks in the minor field of the opponent game character have changed due to the strong flame;

FIG. 18A is a view of a game image showing the manner in which a liquid is poured from a game character into the minor field of the opponent game character;

FIG. 18B is a view of a game image showing the manner in which the blocks in the minor field of the opponent game character have are made less visible due to the poured liquid;

FIG. 19A is a view of a game image showing the manner in which minor game characters are sent from a game character into the minor field of the opponent game character;

FIG. 19B is a view of a game image showing the manner in which the blocks in the minor field of the opponent game character have are made less visible due to sent minor characters;

FIGS. 20 through 23 are a flowchart of a processing sequence carried out by the game executing means; and

FIG. 24 is a diagram showing details of an attach information table.

## DESCRIPTION OF THE PREFERRED EMBODIMENT

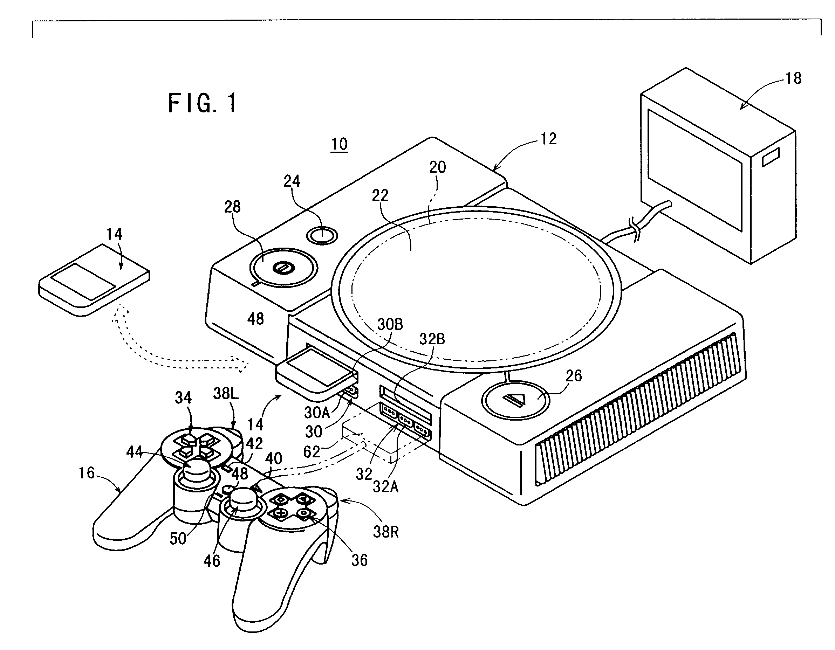

As shown in FIG. 1, an entertainment system 10 basically comprises an entertainment apparatus 12 for executing various programs, a memory card 14 detachably connected to the entertainment apparatus 12, a manual controller 16 detachably connected to the entertainment apparatus 12 by a connector 62, and a display monitor 18 such as a television receiver which is supplied with video and audio output signals from the entertainment apparatus 12.

The entertainment apparatus 12 reads a program recorded in a mass storage medium such as an optical disk 20 such as a CD-ROM or the like, and executes a game, for example, based on the program depending on commands supplied from the user, e.g., the game player, via the manual controller 16. The execution of the game mainly represents controlling the progress of the game by controlling the display of images and the generation of sounds on the display monitor 18 based on manual input actions entered from the manual controller 16 via the connector 62.

The entertainment apparatus 12 has a substantially flat casing in the shape of a rectangular parallelepiped which houses a disk loading unit 22 disposed centrally for loading an optical disk 20 for supplying an application program and data for a video game or the like. The casing supports a reset switch 24 for resetting a program which is being presently executed, a disk control switch 26 for controlling the loading of the optical disk 20, a power supply switch 28, and two slots 30, 32.

The entertainment apparatus 12 may be supplied with the application program via a communication link, rather than being supplied from the optical disk as the recording medium.

The slots 30, 32 have respective upper slot units 30B, 32B and respective lower slots units 30A, 32A. Two manual controllers 16 may be connected respectively to the lower slots units 30A, 32A, and memory cards 14 for storing flags indicative of interim game data may be connected respectively to the upper slots units 30B, 32B. The slots 30, 32 (the upper slot units 30B, 32B and the lower slots units 30A, 32A) are asymmetrically shaped to prevent the connectors 62 and the memory cards 14 from being inserted in the wrong direction.

The manual controller 16 has first and second control pads 34, 36, an L (Left) button 38L, an R (Right) button 38R, a start button 40, and a selection button 42. The manual controller 16 also has swivel control members 44, 46 for making analog control actions, a mode selection switch 48 for selecting control modes of the swivel control members 44, 46, and an indicator 50 for indicating a selected control mode. The indicator 50 comprises a light-emitting element such as a photodiode or the like.

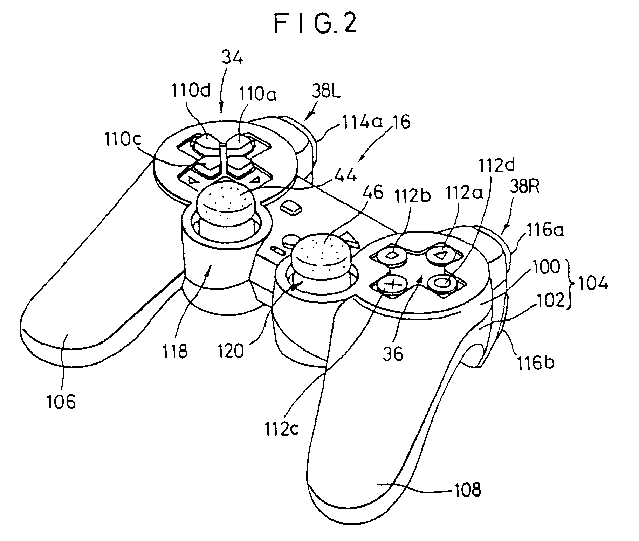

As shown in FIG. 2, the manual controller 16 has a housing 104 comprising an upper member 100 and a lower member 102 which are mated and joined to each other by fasteners such as screws.

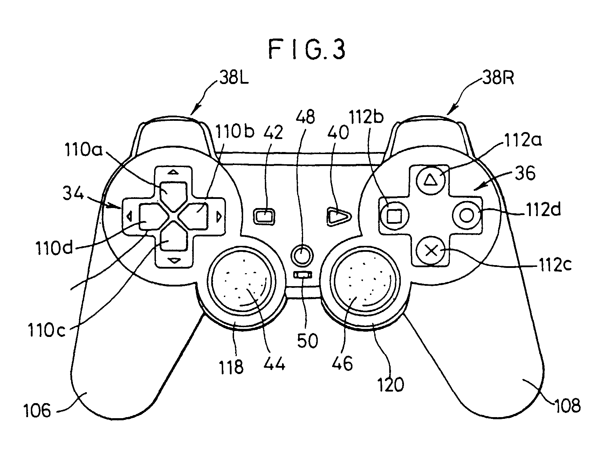

As shown in FIGS. 2 and 3, a pair of first and second grips 106, 108 projects from one side of respective opposite ends of the housing 104. The first and second grips 106, 108 are shaped so as to be gripped by the palms of left and right hands of the user or game player when the manual controller 16 is connected to the entertainment apparatus 12 and information retrieval is carried out or the game is played thereby, for example.

As shown in FIG. 3, the first and second grips 106, 108 are progressively spaced away from each other toward their distal ends. To allow the game player to grip the first and second grips 106, 108 comfortably for a long period of time, the first and second grips 106, 108 are tapered from their joint with the housing 104 toward their distal ends, and have arcuate outer peripheral surfaces and arcuate distal end surfaces.

As shown in FIGS. 2 and 3, the first control pad 34 is disposed on one end of the housing 104 and comprises first through fourth pressable control members 110a, 110b, 110c, 110d. The first through fourth pressable control members 110a, 110b, 110c, 110d project on an upper surface of the housing 104 and are arranged in a crisscross pattern.

The first control pad 34 includes switch elements as signal input elements associated respectively with the first through fourth pressable control members 110a, 110b, 110c, 110d. The first control pad 34 functions as a directional controller for controlling the direction of movement of a displayed game character, for example. When the game player selectively presses the first through fourth pressable control members 110a, 110b, 110c, 110d to turn on or off the switch elements associated respectively with the first through fourth pressable control members 110a, 110b, 110c, 110d, the displayed game character moves in the direction corresponding to the pressed one of the first through fourth pressable control members 110a, 110b, 110c, 110d.

As shown in FIGS. 2 and 3, the second control pad 36 is disposed on the other end of the housing 104 and comprises first through fourth pressable control members 112a, 112b, 112c, 112d. The first through fourth pressable control members 112a, 112b, 112c, 112d project on the upper surface of the housing 104 and are arranged in a crisscross pattern.

The first through fourth pressable control members 112a, 112b, 112c, 112d are constructed as independent members, and associated with respective switch elements disposed in the second control pad 36.

The second control pad 36 serves as a function setting/performing unit for setting functions for a displayed game character assigned to the pressable control members 112a - 112d or performing functions of a displayed game character when the switch elements associated with the pressable control members 112a - 112d are turned on.

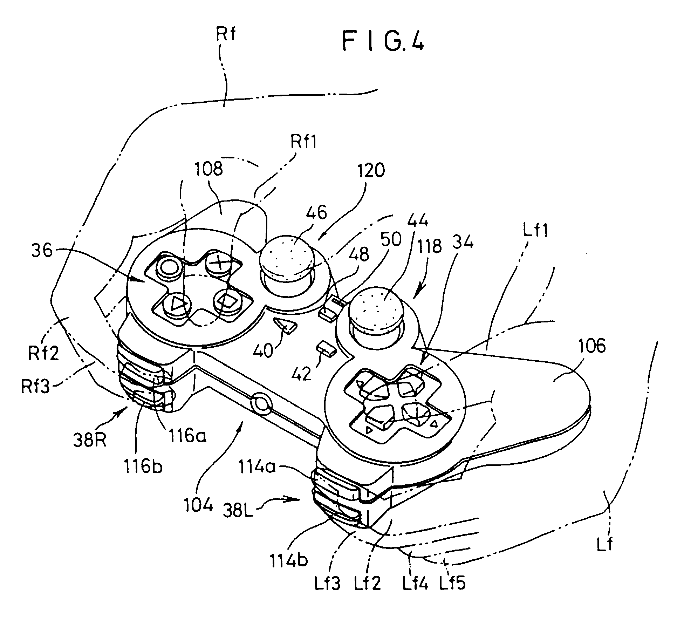

The L button 38L and the R button 38R are disposed on a side of the housing 104 remote from the first and second grips 106, 108 and positioned respectively at the opposite ends of the housing 104. As shown in FIG. 4, the L button 38L and the R button 38R have respective first and second pressable control members 114a, 114b and 116a, 116b and respective switch elements associated respectively with the pressable control members 114a, 114b and 116a, 116b.

The L button 38L and the R button 38R serve as respective function setting/performing units for setting functions for a displayed game character assigned to the pressable control members 114a, 114b and 116a, 116b or performing functions of a displayed game character when the switch elements associated with the pressable control members 114a, 114b and 116a, 116b are turned on.

As shown in FIGS. 2 and 3, the manual controller 16 also has first and second analog control pads 118, 120 disposed respectively at confronting corners defined between the housing 104 and the proximal ends of the first and second grips 106, 108 which are joined to the housing 104.

The first and second analog control pads 118, 120 have the respective swivel control members 44, 46 rotatable 360° about control shafts thereof, and respective signal input elements such as variable resistors or the like which are operable by the respective swivel control members 44, 46. Specifically, the swivel control members 44, 46 are mounted on tip ends of the control shafts that are normally urged to return to their neutral positions by biasing members, and can be rotated 360° about the axes of the control shafts.

The first and second analog control pads 118, 120 can move a displayed game character while rotating the same or while changing its speed, and can make an analog-like action such as to change the form of a displayed character, when the game player rotates the swivel control members 44, 46. Therefore, the first and second analog control pads 118, 120 are used as a control unit for entering command signals for a displayed character to perform the above movement or action.

When the mode selection switch 48 is pressed, it can select a control mode for allowing a command signal to be inputted from the first and second analog control pads 118, 120 or a control mode for inhibiting a command signal from being inputted from the first and second analog control pads 118, 120.

When the mode selection switch 48 is pressed, it can also select a control mode for allowing a command signal to be inputted from the first and second analog control pads 118, 120 and selecting the function of the first through fourth pressable control members 112a, 112b, 112c, 112d of the second control pad 36 or the function of the pressable control members 114a, 114b and 116a, 116b of the L button 38L and the R button 38R. Depending on the control mode selected by the mode selection switch 48, the mode indicator 50 flickers and changes its indication light.

As shown in FIG. 4, the first and second grips 106, 108 projecting from the housing 104 are gripped respectively by the palms of the hands of the game player. The housing 104 is not required to be supported by fingers, and the manual controller 16 can be held by the hands while at least six out of the ten fingers of the hands can freely be moved.

As shown in FIG. 4, when the first and second grips 106, 108 are gripped respectively by the palms of the hands of the game player, the thumbs Rf1, Lf1 of the right and left hands can extend over the swivel control members 44, 46 of the first and second analog control pads 118, 120, the first through fourth pressable control members 110a - 110d of the first control pad 34, and the first through fourth pressable control members 112a - 112d of the second control pad 36, and can selectively press the swivel control members 44, 46, the pressable control members 110a - 110d, and the pressable control members 112a - 112d.

Since the swivel control members 44, 46 of the first and second analog control pads 118, 120 are positioned in confronting relation to the proximal ends of the first and second grips 106, 108 which are joined to the housing 104, when the first and second grips 106, 108 are gripped by the left and right hands, the swivel control members 44, 46 are positioned most closely to the thumbs Rf1, Lf1, respectively. Therefore, the swivel control members 44, 46 can easily be rotated by the thumbs Rf1, Lf1.

As shown in FIG. 4, when the first and second grips 106, 108 are gripped respectively by the palms of the hands of the game player, the index fingers Rf2, Lf2 and middle fingers Rf3, Lf3 of the right and left hands can extend over positions where they can selectively press the first and second pressable control members 114a, 114b and 116a, 116b of the R button 38R and the L button 38L.

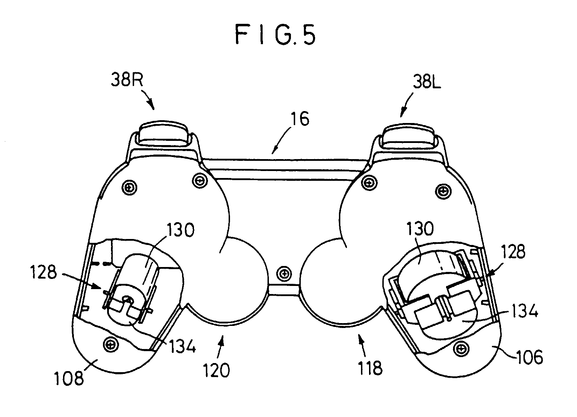

As shown in FIG. 5, the manual controller 16 has a pair of vibration imparting mechanisms 128 for imparting vibrations to the user in order for the user to be able to play a highly realistic game.

As shown in FIG. 5, the vibration imparting mechanisms 128 are positioned near the proximal ends of the first and second grips 106, 108 that are held by the hands and fingers when the manual controller 16 is gripped by the user.

Each of the vibration imparting mechanisms 128 comprises a motor 130 energizable by a vibration generating command supplied from the entertainment apparatus 12, and an eccentric member 134 mounted eccentrically on the drive shaft of the motor 130.

The eccentric member 134 comprises a weight in the form of a heavy metal member having a semicircular cross-sectional shape. The weight has an off-center hole defined therein in which the drive shaft of the motor 130 is fitted.

When the motor 130 is energized, the drive shaft thereof rotates to cause the eccentric member 134 to rotate in an eccentric motion for thereby producing vibrations, which are imparted to the motor 130. The vibrations of the motor 130 are then transmitted to the first grip 106 and the second grip 108, from which the vibrations are applied to the hand and fingers that grip the first grip 106 and the second grip 108.

The vibration imparting mechanisms 128 disposed respectively in the first and second grips 106, 108 are arranged to impart vibrations in different modes. For example, the motors 130 of the vibration imparting mechanisms 128 have different sizes such that when the motors 130 are energized at a constant voltage, their drive shafts rotate at different speeds to rotate the eccentric members 134 at different speeds for thereby generating vibrations at different frequencies.

In order to energize the motors 130 to vibrate the manual controller 16 in its entirety, a bidirectional communication function needs to be provided between the manual controller 16 and the entertainment apparatus 12. This bidirectional communication function will be described later on.

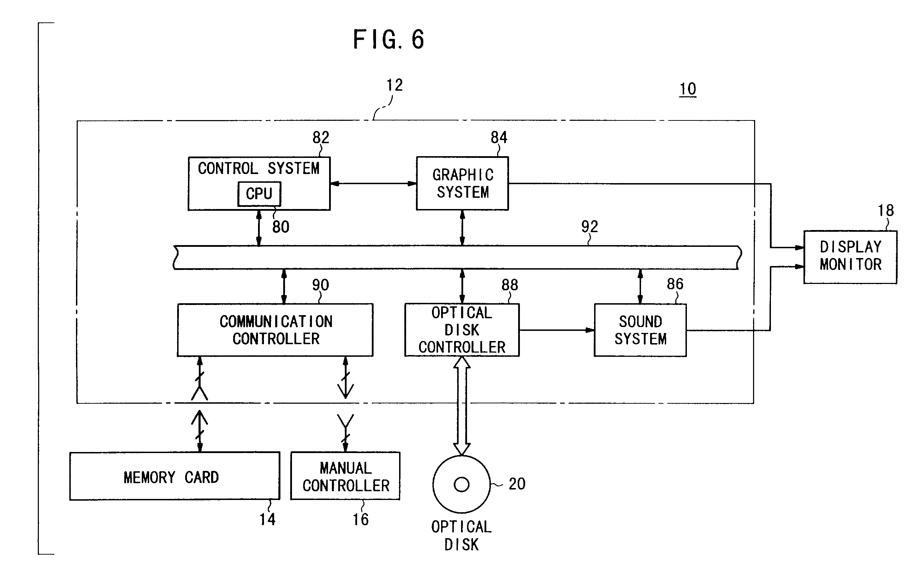

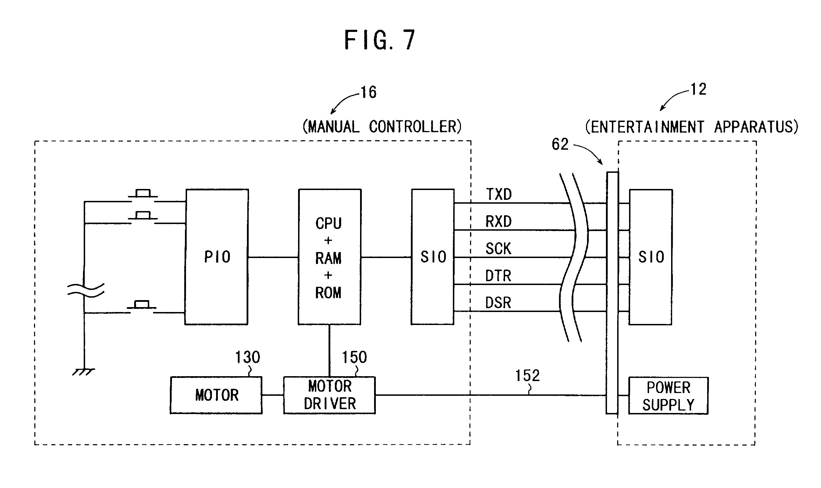

Circuit arrangements of the entertainment apparatus 12 and the manual controller 16 will be described below with reference to FIGS. 6 and 7.

As shown in FIG. 6, the entertainment apparatus 12 comprises a control system 82 including a central processing unit (CPU) 80 and peripheral devices thereof, a graphic system 84 including a frame buffer (not illustrated) and a graphic processing unit (GPU) for rendering image data in the frame buffer, a sound system 86 including a sound processing unit (SPU) for generating music sounds and sound effects, an optical disk controller 88 for controlling the readout of the optical disk 20 in which application programs and data are stored, a communication controller 90 for controlling the inputting of data into and outputting of data from the manual controller 16 and the memory card 14, and a system bus 92 to which the control system 82, the graphic system 84, the sound system 86, the optical disk controller 88, and the communication controller 90 are connected.

Video and audio signals generated by and outputted from the graphic system 84 and the sound system 86 are supplied to the display monitor 18 to display images on the display screen of the display monitor 18 and reproduce sounds from the speakers of the display monitor 18.

As shown in FIG. 7, the bidirectional communication function between the entertainment apparatus 12 and the manual controller 16 can be performed when the connector 62 capable of performing bidirectional serial communications with the manual controller 16 is connected to the entertainment apparatus 12.

A system in the manual controller 16 for performing the bidirectional communication function comprises a serial I/O interface SIO for performing serial communication with the entertainment apparatus 12, a parallel I/O interface PIO for entering control data from a plurality of control buttons, a one-chip microcomputer comprising a CPU, a RAM, and a ROM, and a motor driver 150 for energizing the motors 130 of the vibration imparting mechanisms 128. Each of the motors 130 is energized by a voltage and a current supplied from the motor driver 150.

A system in the entertainment apparatus 12 for performing the bidirectional communication function comprises a serial I/O interface SIO for performing serial communication with the manual controller 16. When the connector 62 is connected to the serial I/O interface SIO of the entertainment apparatus 12, the serial I/O interface SIO of the entertainment apparatus 12 is connected to the serial I/O interface SIO of the manual controller 16 via the connector 62 for performing bidirectional communications between the manual controller 16 and the entertainment apparatus 12. Other structural details of the entertainment apparatus 12 are omitted from illustration in FIG. 7.

Signal and control lines for bidirectional serial communications include a data transfer signal line TXD (Transmit X' for Data) for sending data from the entertainment apparatus 12 to the manual controller 16, a data transfer signal line RXD (Received X' for Data) for sending data from the manual controller 16 to the entertainment apparatus 12, a serial synchronous clock signal line SCK (Serial Clock) for extracting data from the data transfer signal lines TXD, RXD, a control line DTR (Data Terminal Ready) for establishing and cutting off communication with the manual controller 16 as a terminal, and a flow control line DSR (Data Set Ready) for transferring a large amount of data.

The signal and control lines for bidirectional serial communication are accommodated in a cable. As shown in FIG. 7, this cable further includes a power line 152 extending from a power supply in the entertainment apparatus 12 and connected to the motor drivers 150 in the manual controller 16 for supplying electric energy to energize the motors 130.

A process of bidirectional serial communication between the manual controller 16 and the entertainment apparatus 12 will be described below. In order for the entertainment apparatus 12 to communicate with the manual controller 16 to read control data of the control buttons (button information) of the first and second control pads 34, 36 and the L button 38L and the R button 38R, the entertainment apparatus 12 first outputs selection data to the control line DTR. As a result, the manual controller 16 confirms that it is selected by the control line DTR, and then waits for a signal from the signal line TXD. Then, the entertainment apparatus 12 outputs an identification code indicative of the manual controller 16 to the data transfer signal line TXD. The manual controller 16 receives the identification code from the signal line TXD.

When the manual controller 16 recognizes the identification code, the manual controller 16 starts communicating with the entertainment apparatus 12. The entertainment apparatus 12 sends control data via the data transfer signal line TXD to the manual controller 16, which sends control data produced by a control button via the data transfer signal line RXD to the entertainment apparatus 12. In this manner, the entertainment apparatus 12 and the manual controller 16 perform bidirectional serial communications. The bidirectional serial communications will be finished when the entertainment apparatus 12 outputs selection stop data via the control line DTR.

With the bidirectional serial communication function, the manual controller 16 can send mainly control data of control buttons to the entertainment apparatus 12, and the entertainment apparatus 12 can send a vibration generating command for energizing the motors 130 of the vibration imparting mechanisms 128 via the data transfer signal line TXD to the manual controller 16.

The vibration generating command for energizing the motors 130 has been established in advance in a CD-ROM set in the entertainment apparatus 12. Depending on the motion target for the user who plays the game, the entertainment apparatus 12 sends the vibration generating command to the manual controller 16 to feed back vibrations for a certain period of time to the manual controller 16.

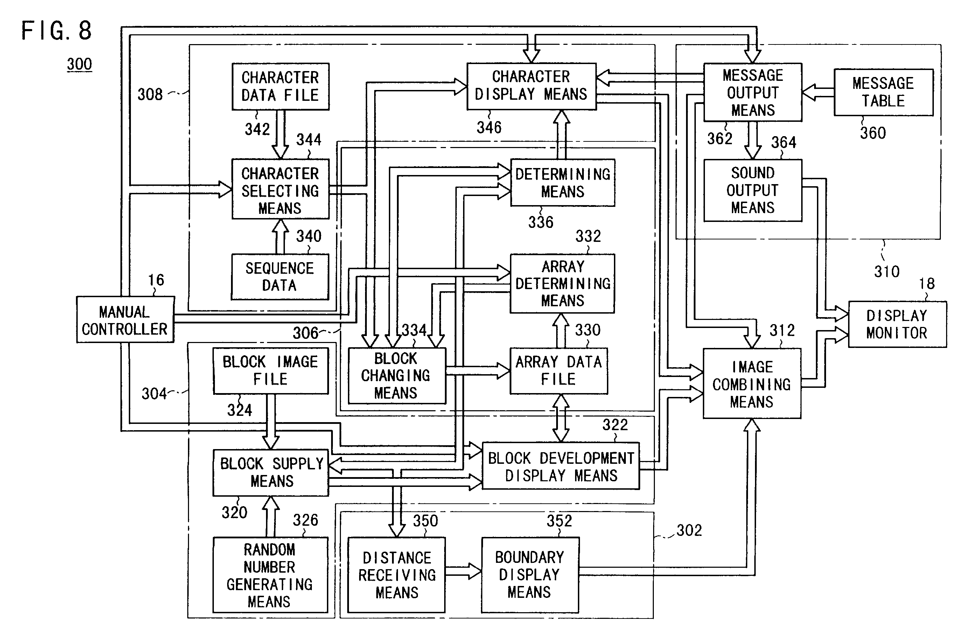

A characteristic game function of the entertainment system 10 according to an embodiment of the present invention will be described below with reference to FIGS. 8 through 19B.

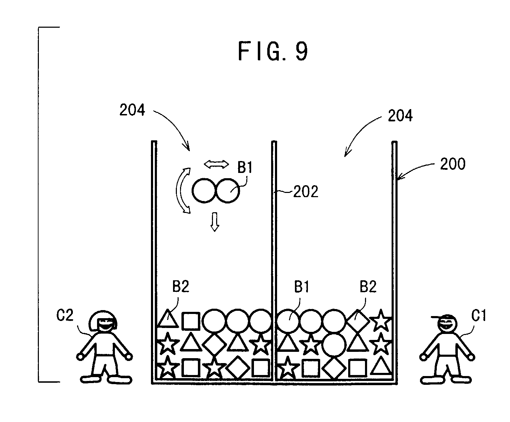

The software for performing the characteristic game function comprises, as shown in FIG. 8, a game executing means 300. As shown in FIGS. 8 and 9, the game executing means 300 comprises a boundary line displaying means 302 for displaying the image of a boundary line 202 which virtually crosses a virtual field 200 displayed on the display monitor 18 and divides the virtual field 200 into a plurality of minor fields 204, a block developing means 304 for developing a plurality of block images B1, B2, ··· in the minor fields 204, and a block changing means 306 for changing at least one of the block images B1, B2, ··· developed in the virtual field 200 including the minor fields 204 according to predetermined rules.

The game executing means 300 also comprises a character displaying means 308 for displaying character images C1, C2 in or out of the virtual field 200 displayed on the display monitor 18, a message outputting means 310 for displaying a message depending on a manual input action in or out of the virtual field 200 displayed on the display monitor 18, and an image combining means 312 for combining display data from the various displaying means and displaying the combined display data on the display monitor 18.

The block developing means 304 has a block supply means 320 and a block development display means 322. The block supply means 320 reads block image data from a block image file 324 which stores types of block image data based on three instruction types, for example. The block development display means 322 converts block image data read by the block supply means 320 into animation display data, for example, and outputs the animation display data to the image combining means 312.

The three instruction types for reading block image data will be described primarily with respect to blocks B1 which are assumed to be "egg" blocks B1.

The first instruction type is based on a random number generated by a random number generating means 326, and serves to read a pair of block image data corresponding to the generated random number. For example, as shown in FIG. 9, based on the first instruction type, a pair of "egg" blocks B1, B1 is displayed on the display monitor 18 as they are put into the minor fields 204. When manual control data from the control buttons of the manual controller 16 is supplied to the block development display means 322, the "egg" blocks B1, B1 are moved horizontally, rotated, or dropped depending on the supplied manual control data.

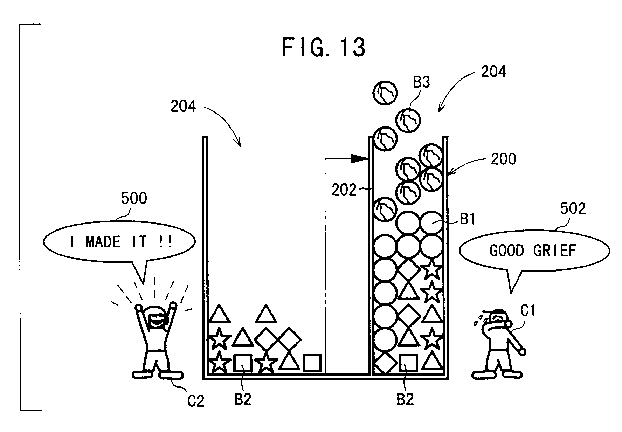

The second instruction type is based on instructions from a determining means 336 (described later on) of the block changing means 306. The instructions from the determining means 336 include an instruction for reading special block image data (e.g., a "stone egg" block B3, see FIG. 13) and an instruction with respect to the number of such special block images. For example, as shown in FIG. 13, based on the second instruction type, as many "stone egg" blocks B3 as instructed are displayed on the display monitor 18 as they are put into the minor fields 204.

The third instruction type is based on an instruction from the block development display means 322. The instruction from the block development display means 322 serves to read block image data corresponding to attributes of blocks B1, B2, B3 read from a data file relative to arrays of the blocks B1, B2, B3 (array data file 330) from the block image file 324 and displays the read block image data on the display monitor 18.

Therefore, a plurality of blocks B1, B2 developed in the minor fields 204 are displayed in a pattern according to block attributes stored in the array data file 330. In the displayed pattern shown in FIG. 9, "egg" blocks B1 and "content" blocks B2 are mixed with each other.

The block changing means 306 has an array determining means 332, a block changing means 334, and a determining means 336.

If manual control data from the manual controller 16 satisfies a certain condition, the array determining means 332 reads block attributes of the blocks B1, B2, etc. developed in the minor field 204 to be operated upon, i.e., the minor field 204 in which a pair of blocks B1 is placed, from the array data file 330, and determines an arrayed state of the blocks B1, B2, etc. developed in the minor field 204 to be operated upon.

Based on the information of the arrayed state from the array determining means 332, the block changing means 334 changes the block attributes in the array data file 330 of the blocks B1, B2, etc. developed in the minor field 204 to be operated upon.

A typical processing sequence carried out by the array determining means 332 and the block changing means 334 will be described below primarily with respect to blocks B1 which are assumed to be "egg" blocks B1.

While a certain control button, e.g., a △ button, of the manual controller 16 is being pressed, data indicative of the inhibition of array determination is supplied to the array determining means 332, and the array of "egg" blocks B1 and "content" blocks B2, etc. developed in the minor field 204 to be operated upon is not determined.

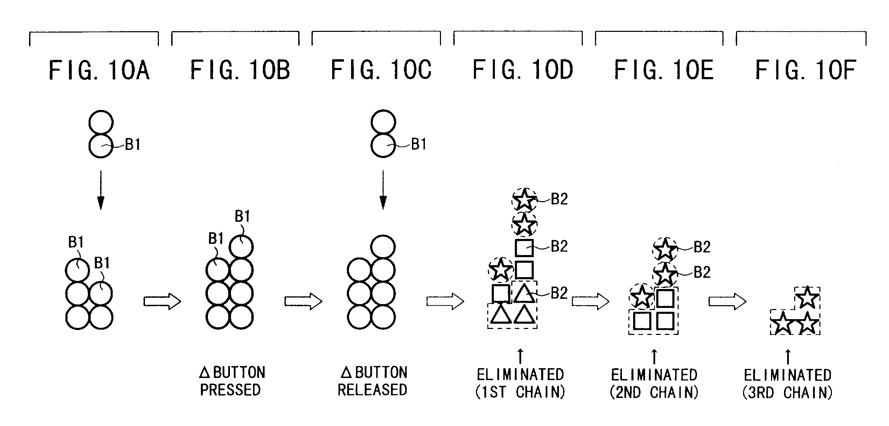

Therefore, as shown in FIGS. 10A and 10B, when an introduced pair of "egg" blocks B1 is dropped onto an "egg" block B1 which has already been placed in the minor field 204, no "egg" blocks B1 are caused to crack, and remain to be "egg" blocks B1.

When the △ button is released, no data indicative of the inhibition of array determination is supplied to the array determining means 332, and the array of "egg" blocks B1 and "content" blocks B2, etc. developed in the minor field 204 to be operated upon is determined.

Therefore, as shown in FIGS. 10C and 10D, when an introduced pair of "egg" blocks B1 is dropped onto an "egg" block B1 which has already been stacked in the minor field 204, the "egg" blocks B1 are caused to crack. All "egg" blocks B1 positioned adjacent to the cracked "egg" blocks B1 are also cracked, turning into "content" blocks B2.

If three or more "content" blocks B2 of the same type (color or shape) are successively joined vertically and horizontally, then a new event happens in which all these joined "content" blocks B2 of the same type are eliminated. If the elimination of these "content" blocks B2 due to their array is defined as a chain, then the elimination of △ blocks shown in FIG. 10D may be recognized as a first chain.

When some of the "content" blocks B2 are eliminated, i.e., the △ blocks are eliminated, the remaining "content" blocks B2 are rearranged as shown in FIG. 10E. At this time, since three □ blocks are successively joined, these three □ blocks are also eliminated as a second chain.

When the □ blocks are eliminated, the remaining "content" blocks B2 are rearranged as shown in FIG. 10F. Now, three ☆ blocks are successively joined, and eliminated as a third chain.

As described above, when a sufficient number of "egg" blocks B1 are stacked and cracked, it is possible to activate a chain of three or more blocks, allowing the user or game player to enjoy a dynamic game development. At the time "egg" blocks B1 are cracked or a chain is established, a signal may be supplied to the vibration imparting mechanisms 128 of the manual controller 16 to vibrate the manual controller 16.

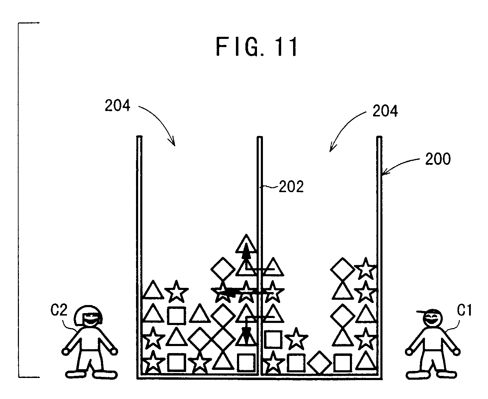

As shown in FIG. 11, a chain can occur irrespective of the boundary line 202, but anywhere within the virtual field 200. Accordingly, the user or game player can use its own action to establish a chain to eliminate "egg" blocks B1 and "content" blocks B2 stacked by the opponent's minor field 204 as indicated by the arrows in FIG. 11. The user can therefore enjoy an unexpected game development.

A chain can be greatly changed by the presence of a "stone egg" block B3. A "stone egg" block B3 has such a shape that a shell of stone, for example, is applied to the outer surface of an ordinary "egg" block B1. When an ordinary "egg" block B1 is positioned adjacent to a "stone egg" block B3 and cracks the "stone egg" block B3, the shell of the "stone egg" block B3 is broken, causing the "stone egg" block B3 to turn into an ordinary "egg" block B1.

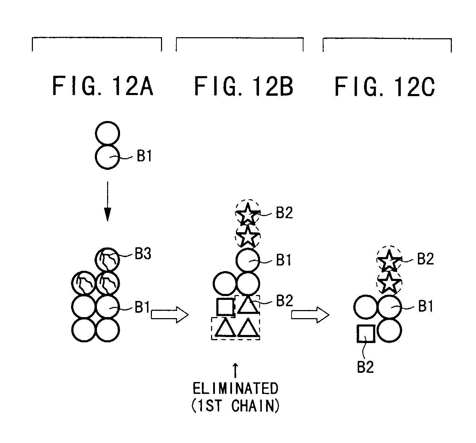

For example, as shown in FIG. 12A, while the Δ button is being released, when an ordinary "egg" block B1 is dropped onto a "stone egg" block B3, the ordinary "egg" block B1 and the "stone egg" block B3 are cracked, and as a result, all "stone egg" blocks B3 and ordinary "egg" blocks B1 adjacent the cracks blocks are cracked. At this time, the cracked ordinary "egg" blocks B1 turn into "content" blocks B2, but the "stone egg" block B3 turn into ordinary "egg" blocks B1, but not "content" blocks B2.

Therefore, as shown in FIGS. 12B and 12C, only one chain is activated by the elimination of three Δ blocks, but three chains (see FIGS. 10D - 10F) are not activated.

When "stone egg" blocks B3 are placed in the virtual field 200, in order to produce "content" blocks B2 that can establish a chain, it is necessary to crack the "stone egg" blocks B3 in two stages, i.e., to change the "stone egg" blocks B3 to "egg" blocks B1 and then to "content" blocks B2. Therefore, if the game has a such rule that the game player with the minor field 204 full of "egg" blocks B1 and "content" blocks B3, etc. is declared the loser, then the game player with the minor field 204 containing "stone egg" blocks B3 is forced to deal with a more disadvantageous game development.

The determining means 336 determines an effect to be given to the opponent based on the number of eliminated "content" blocks B2 and the number of chains which are produced by the block changing means 334.

Specifically, the determining means 336 calculates the number of "stone egg" blocks B3 to be introduced and a distance which the boundary line 202 is to be displaced (described later on), based on the number of eliminated "content" blocks B2 and the number of chains which are produced by the block changing means 334, and calculates an effect including the number and the arrangement of "egg" blocks B1 and "content" blocks B3 which are to be specially changed developed in the opponent's minor field 204, and an effect for making the minor field 204 less visible.

Based on the number of "stone egg" blocks B3 to be introduced from the determining means 336, the block supply means 320 reads as many image data of "stone egg" blocks B3 as the supplied number from the block image file 324, and outputs the image data to the block development display means 322. The block development display means 322 displays a corresponding number of "stone egg" blocks B3 as they are introduced into the opponent's minor field 204 on the display monitor 18.

Based on the effect calculated by the determining means 336, particularly the number and the arrangement of "egg" blocks B1 and "content" blocks B3 which are to be specially changed, the block changing means 334 changes block attributes in the array data file 330 of the various blocks developed in the opponent's minor field 204. Specifically, if a selected block has the attribute of a "content" block B2, then the block changing means 334 changes the attribute to an "egg" block B1 or a "stone egg" block B3.

The character displaying means 308 has a character selecting means 344 for selecting character image data from a character data file 342 based on manual control data from the manual controller 16 or sequence data 340 stored in a register, and a character display means 346 for converging the selected character image data into animation display data, for example, and outputting the animation display data to the image combining means 312.

When the game is played in a story mode in which the user or game player is in a principal character's role, various characters (enemy characters) successively appear according to the sequence data 340, and are displayed on the display monitor 18. When the game is played in a competition mode, characters are selected based on manual control data from the manual controller 16 and displayed on the display monitor 18.

Characters displayed on the display monitor 18 are animated into various expressions based on the information representing the effect calculated by the determining means 336 and the number of "stone egg" blocks B3. For example, as shown FIG. 13, when three chains are achieved in the left minor field 204, the left character C2 is animated to express a joyful gesture, and the right character C1 is animated to express a disappointed gesture.

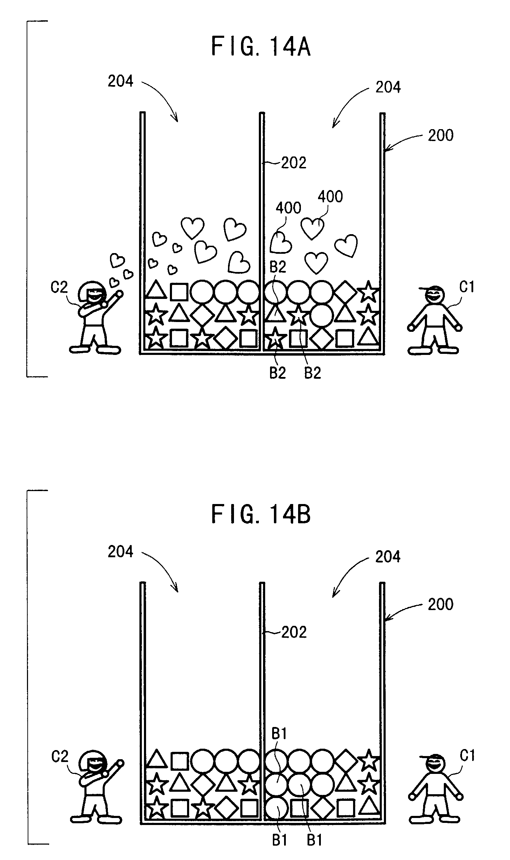

Based on the effect calculated by the determining means 336, the character displaying means 308 produces an event depending on the presently selected characters. For example, if the characters C1, C2 are selected as shown in FIG. 14A, then when the effect on the character Cl reaches a predetermined level, a number of "heart" images 400 are ejected from by the character C1, and reach the minor field 204 belonging to the character C1, in an image displayed on the display monitor 18.

At this time, character selection information representing the selection of the character C2 is supplied to the block changing means 334. Based on the number and the arrangement of "egg" blocks B1 and "content" blocks B3 which are to be specially changed from the determining means 336, the block attribute of certain ones of the blocks developed in the minor field 204 belonging to the character C1 are changed. In FIG. 14A, the block attribute is changed to turn "content" blocks B2 to "egg" blocks B1.

As shown in FIG. 14B, certain ones of the "content" blocks B2 developed in the minor field 204 belonging to the character C1 turn into "egg" blocks B1. Therefore, the user who controls the character C1 enjoys an unexpected game development caused by the sudden change of those blocks. Such an event, i.e., a process for changing opponent's blocks depending on a certain animated expression of the character, can happen in various patterns depending on the type of the character.

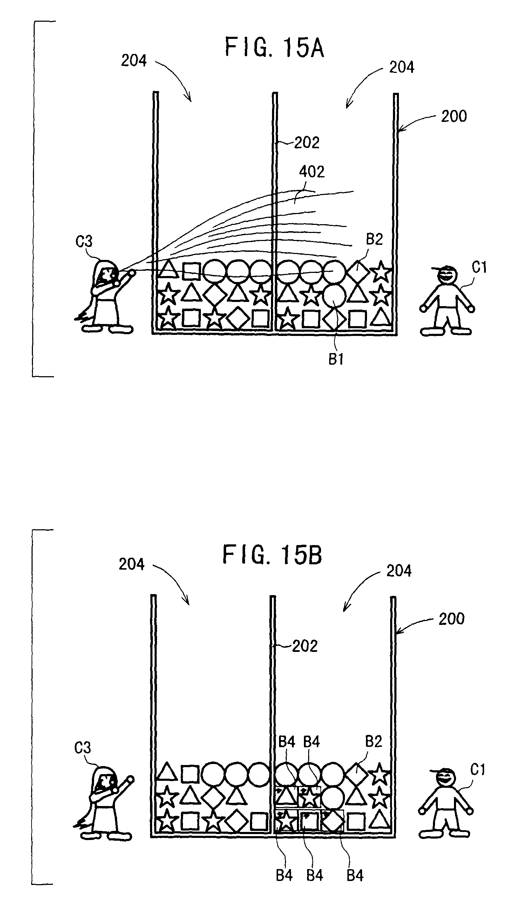

For example, as shown in FIG. 15A, if a character C3 is selected, then when the event happens, the character C3 is animated to give a breath 402 having a cooling effect to the opponent's minor field 204.

Then, as shown in FIG. 15B, those "content" blocks B2 specified by the determining means 336, among the "content" blocks B2 developed in the opponent's minor field 204, turn into "ice" blocks B4. These "ice" blocks B4 return to "content" blocks B2 only when an adjacent "egg" block B1 is cracked. Accordingly, the opponent is forced to suffer a disadvantage in the game.

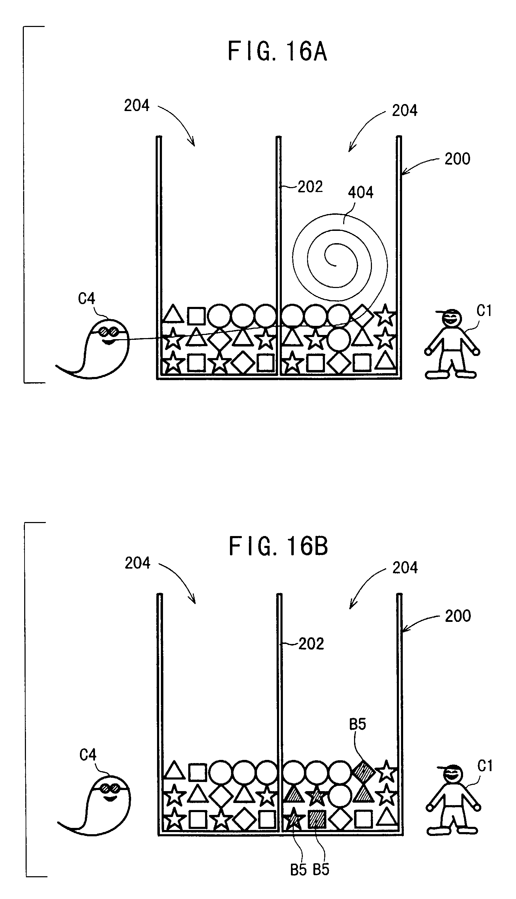

As shown in FIG. 16A, if a character C4 is selected, then when the event happens, the character C4 is animated to send a strong wind 404 to the opponent's minor field 204.

Then, as shown in FIG. 16B, those "content" blocks B2 specified by the determining means 336, among the "content" blocks B2 developed in the opponent's minor field 204, rotate and turn into "rotated" blocks B4. These "rotated" blocks B5 return to "content" blocks B2 only when an adjacent "egg" block B1 is cracked.

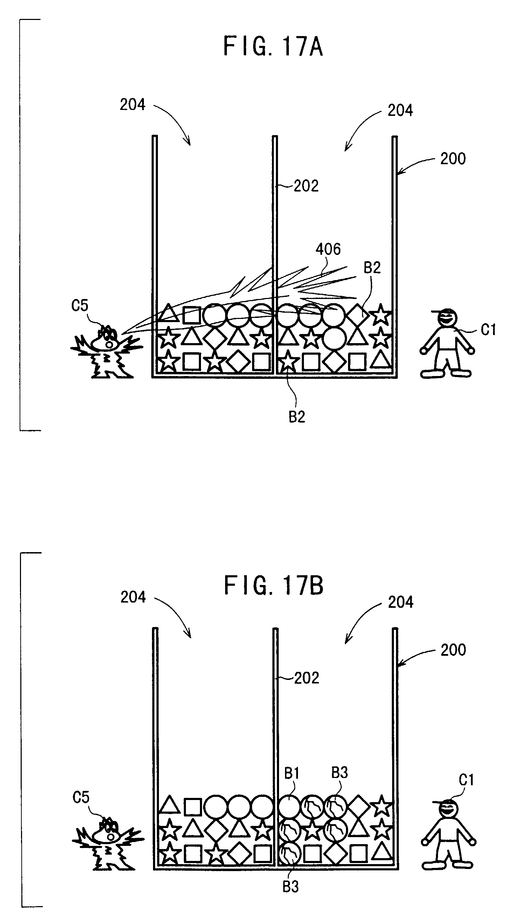

As shown in FIG. 17A, if a character C5 is selected, then when the event happens, the character C5 is animated to eject a strong flame 406 to the opponent's minor field 204. Then, as shown in FIG. 17B, those "egg" blocks B1 and "content" blocks B2 specified by the determining means 336, among the "egg" blocks B1 and the "content" blocks B2 developed in the opponent's minor field 204, turn into "stone egg" blocks B3.

Based on the effect for making the minor field 204 less visible, the character displaying means 308 displays an image for presenting a visual obstacle to the minor field 204 depending on the character and the effect.

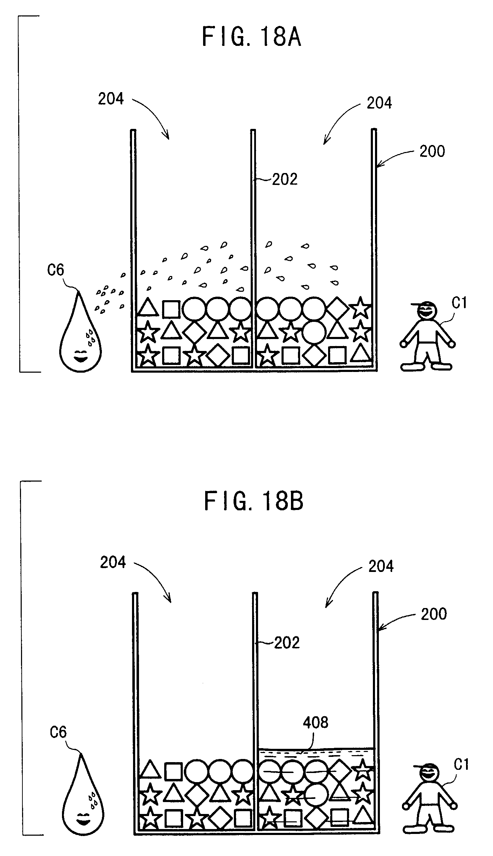

For example, as shown in FIG. 18A, if a character C6 is selected, the character displaying means 308 displays an image in which a liquid is poured from the character C6 into the opponent's minor field 204, as shown in FIG. 18B.

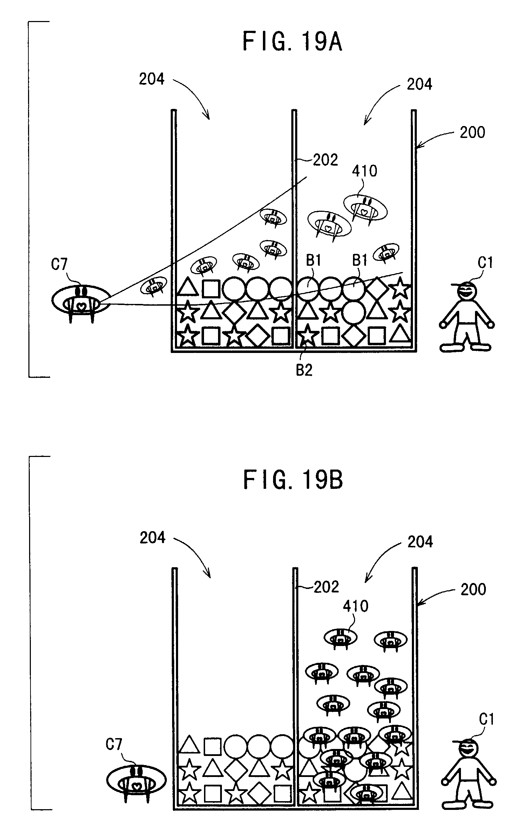

As shown in FIG. 19A, if a character C7 is selected, the character displaying means 308 displays an image in which minor characters 410 are sent from the character C7 into the opponent's minor field 204, and move at random in the opponent's minor field 204 to make the opponent's minor field 204 less visible.

The effect is reflected in the amount of the poured liquid or the number of the introduced minor characters 410, thus making the opponent's minor field 204 less visible depending thereon. If the amount of the liquid 408 or the number of the minor characters 410 is progressively reduced with time, then the opponent user keeps annoyed by the less visibility of the minor field 204 for a certain period of time, and hence is forced to play the game with a disadvantage.

The boundary line displaying means 302 has a distance receiving means 350 for receiving information relative to a distance from the determining means 336, and a boundary display means 352 for displaying the boundary line 202 in the virtual field 200 and moved the boundary line 202 horizontally by the distance which the distance receiving means 350 has received.

Depending on the number of chains or the number of eliminated "content" blocks B2 in the minor field 204 to be operated upon, the boundary line 202 move into the opponent's minor field 204, as shown in FIG. 13. At this time, "stone egg" blocks B3 are also introduced.

If the game has a such rule that the game player with the minor field 204 full of "egg" blocks B1 and "content" blocks B3, etc. is declared the loser, then as the boundary line 202 are moved into the opponent's minor field 204 to make the opponent's minor field 204 smaller, the opponent is forced to play the game with a greater disadvantage. With the boundary line 202 being movable abruptly, the user plays a competition that is unexpected at all times.

The message outputting means 310 has a message output means 362 for reading message data corresponding to manual control data from the manual controller 16 from a message table 360 and outputting the message data to the display monitor 18, and a sound output means 364 for outputting the read message data as sound.

As shown in FIG. 13, the message output means 362 preferably outputs message data such that messages are displayed in a manner to be uttered by character images displayed out of the virtual field 200.

In FIG. 13, a message 500 representing "I MADE IT !" is displayed as a dialog from the left character C2 who has achieved three chains, and a sound corresponding to the message 500 is also outputted. At the same time, a message 502 representing "GOOD GRIEF" is displayed as a dialog from the right character C1, and a sound corresponding to the message 502 is also outputted.

The control buttons of the manual controller 16 and messages are related as follows:

When an L1 button (the left first pressable control member) 114a of the manual controller 16 is pressed, a message representing "IMPATIENCE" is displayed, and outputted as sound. When an L2 button (the left second pressable control member) 114b of the manual controller 16 is pressed, a message representing "SURPRISE" is displayed, and outputted as sound.

When an R1 button (the right first pressable control member) 116a of the manual controller 16 is pressed, a message representing "COMPOSURE" is displayed, and outputted as sound. When an R2 button (the right second pressable control member) 116b of the manual controller 16 is pressed, a message representing "PROVOCATION" is displayed, and outputted as sound.

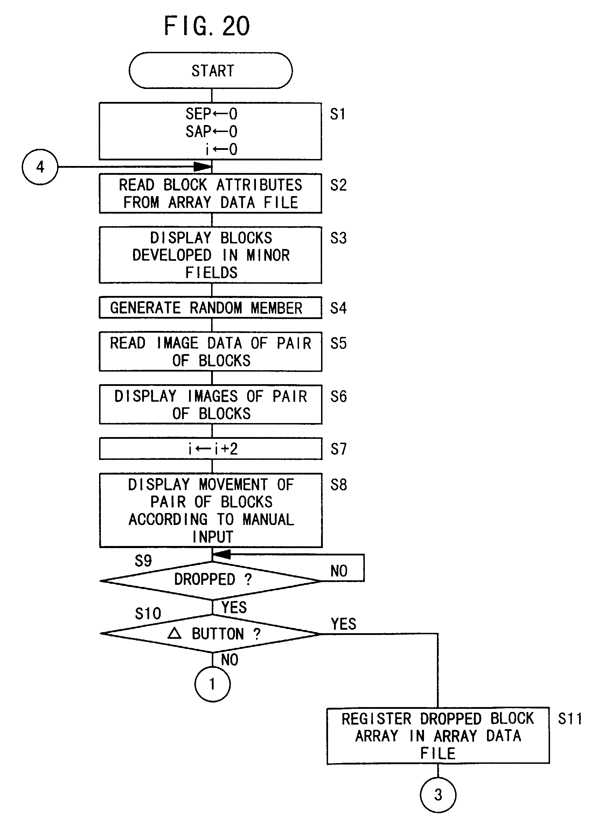

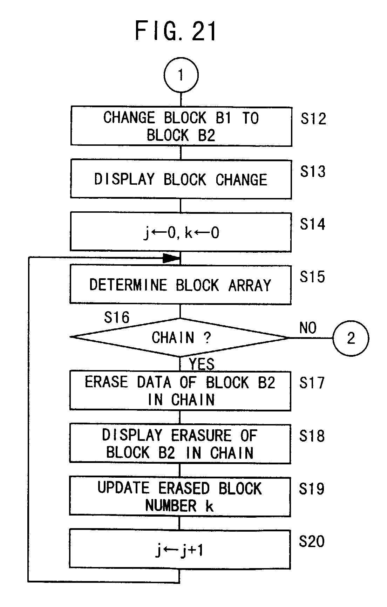

Processing operation of the game executing means 300 will be described below with reference to FIGS. 20 - 24. The game executing means 300 is activated in as many tasks as the number of persons involved in the game for competition, and operates in a multitask process.

In step S1 (FIG. 20), the determining means 336 initializes an accumulated egg point SEP and a general attack point SAP to "0", and stores the initial value "0" in a developed block number i. Thereafter, in step S2, the block development display means 322 reads the attributes of game player's and opponent's blocks from the array data file 330. In step S3, the block development display means 322 reads block image data corresponding to the read block attributes from the block image file 324, and displays blocks based on the block image data on the display monitor 18. Now, the blocks developed in the game player's and opponent's minor fields 204 are displayed. Initially, since no blocks are dropped into the minor fields 204, only a blank space is displayed in the minor fields 204.

Then, in step S4, the random number generating means 326 generates a random number with respect to blocks to be introduced. In step S5, the block supply means 320 reads a pair of block image data corresponding to the generated random number from the block image file 324. In step S6, the block development display means 322 displays the pair of block image data on the display monitor 18. On the display monitor 18, the block image data are animated such that a pair of blocks are introduced into the game player's minor field 204.

In step S7, the number (= 2) of introduced blocks are added to the developed block number i. In step S8, the block development display means 322 moves the introduced pair of blocks horizontally, rotates the introduced pair of blocks, or forcibly drops the introduced pair of blocks depending on manual control data from the manual controller 16.

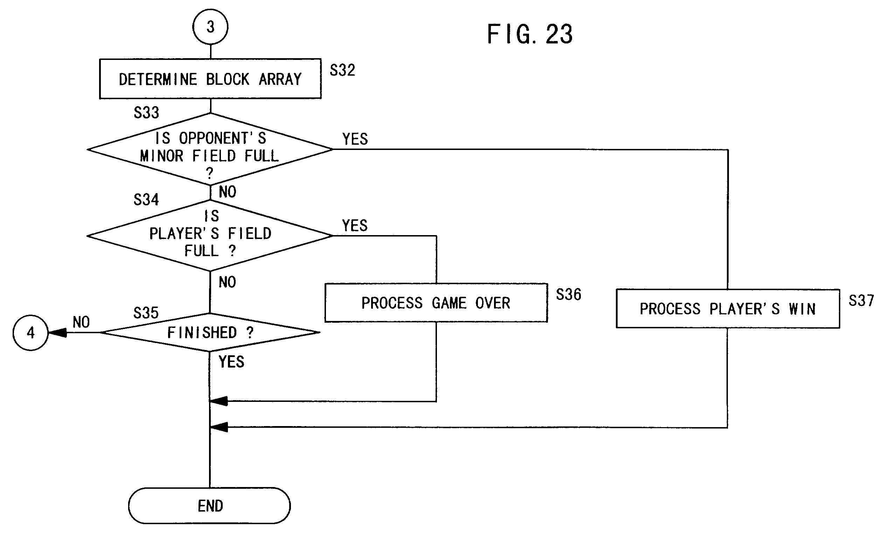

In step S9, the dropping of the pair of blocks is awaited. If the pair of blocks has dropped, then it is determined whether the Δ button 112a, for example, is pressed or not in step S10. If the Δ button 112a is pressed, then the array of the dropped blocks is registered in the array data file 330 in Step S11. Then, control goes to step S32 (see FIG. 23). The processing of step S32 and following steps will be described later on.

If the Δ button 112a is not pressed in step S10, then control proceeds to step S12. In step S12, the block changing means 334 changes "egg" blocks B1 at a position where the pair of blocks has dropped and at nearby positions, of data in the array data file 330 relative to the game player's minor field 204, to blocks B2. Thereafter, in step S13, the block development display means 322 displays the changing of the blocks on the display monitor 18. On the display monitor 18, therefore, the "egg" blocks B1 at the position where the pair of blocks has dropped and at the nearby positions in the game player's minor field 204 are cracked, turning into "content" blocks B2.

In step S14, an initial value "0" is stored in an index register j which is used to update the number of chains and an index register k which is used to update the number of eliminated blocks, thereby initializing the index register j and the index register k. In step S15, the array determining means 332 determines the present arrays of blocks in the array data file 330. If there is an array which satisfies a chain in step S16, then control goes to step S17 in which the block changing means 334 eliminates all data relative to "content" blocks B2 associated with the present chain, of the data stored in the array data file 330.

In step S18, the block development display means 322 displays the changing of the blocks on the display monitor 18. On the display monitor 18, the "content" blocks B2 associated with the present chain, of the displayed "content" blocks B2, are eliminated.

In step S19, the number of eliminated blocks (eliminated block number k) is updated. In step S20, the value of the index register j is incremented by +1. Thereafter, control goes back to step S15 in which the present arrays of blocks in the array data file 330 are determined to check if there is a next chain or not in step S16.

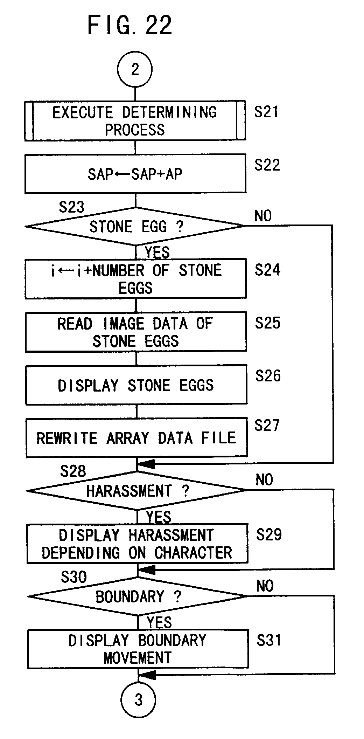

If there is no next chain, then control proceeds to step S21 (FIG. 22) in which the determining means 336 executes a determining process. In the determining process, a present egg point EP is determined from the number of blocks developed in the game player's minor field 204 (developed block number i) and the number of chains (chain number, i.e., the value of the index register j), and added to the accumulated egg point SEP, according to the following equations:

$$EP = (i \times j)/(10/j + 2)$$

$$SEP = SEP + EP$$

Then, an attack point AP is determined from the accumulated egg point SEP, the eliminated block number k, and the chain number j according to the fol-

lowing equation:

$$AP = SEP + \{k \times (J \times 2 - 1)\} + \{(k - 3) \times j/10\}$$

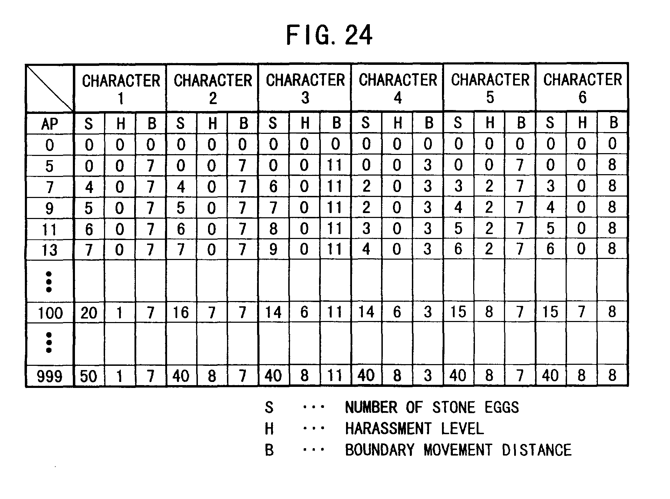

Subsequently, attack data corresponding to the attack point AP and the game player's character is read from an attack information table shown in FIG. 24. As shown in FIG. 24, the attack information table comprises a number of records each storing an attack point AP and attack data corresponding to various characters. For example, the data of the 0th record show that the attack point AP is 5, the number of stone eggs that can be introduced into the opponent's minor field is "0" for the character 1, the harassment level is "0" for the character 1, and the boundary movement distance (block number) is "7" for the character 1, the number of stone eggs that can be introduced into the opponent's minor field is "0" for the character 3, the harassment level is "0" for the character 3, and the boundary movement distance (block number) is "11" for the character 3.

If the attack point AP is less than 5, the data of the record at the attack point AP = 0 are read. If the attack point AP is 6, the data of the record at the attack point AP = 5 are read. If the attack point AP is 12, the data of the record at the attack point AP = 11 are read. Of the attack data of the read records, the attack data corresponding to the game player's character are extracted.

Blocks exchanged between the minor fields are canceled out by calculating the difference between the number of "stone egg" blocks B3 introduced from the game player into the opponent's minor field and the number of "stone egg" blocks B3 introduced from the opponent into the game player's minor field. For example, if the opponent establishes a chain capable of introducing 8 "stone egg" blocks B3 and the game player establishes a chain capable of introducing 10 "stone egg" blocks B3, then 2 "stone egg" blocks B3 are introduced from the game player into the opponent's minor field.

In step S22, the present attack point AP is added to the general attack point SAP. Thereafter, in step S23, it is determined whether it is necessary to introduce "stone egg" block B3 into the opponent's minor field or not based on the number of stone eggs out of the extracted attack data.

If the number of stone eggs is 1 or more, then control goes to step S24 in which the number of stone eggs is added to the developed block number i. In step S25, the block supply means 320 reads block image data of the "stone egg" blocks B3 from the block image file 324. Then, in step S26, the block image data of as many "stone egg" blocks B3 as the number of stone eggs are displayed on the display monitor 18. On the display monitor 18, as many "stone egg" blocks B3 as the number of stone eggs, as animated to be introduced into the opponent's minor field, are displayed.

In step S27, the block changing means 334 rewrites the data (which represents a blank space) at the position where the "stone egg" blocks B3 are dropped, out of the data in the array data file 330 relative to the opponent's minor field 204, with the data of a "stone egg" block B3.

After step S27 or if it is not necessary to introduce "stone egg" blocks B3 in step S23, control proceeds to step S28 which determines whether the opponent is to be harassed or not, based on the harassment level of the extracted attack data. If the opponent is to be harassed, then control goes to step S29 in which a harassment depending on the character is displayed (see FIGS. 14A - 19B). Because of the harassment, the states of opponent's blocks in the array data file 330 are changed and displayed.

After step S29 or if it is not necessary to harass the opponent in step S28, control goes to step S30 in which it is necessary to move the boundary line 202 or not based on the boundary movement distance of the extracted attack data. If the boundary movement distance is one block or more, then control proceeds to step S31 in which the boundary line 202 is displayed as it moves into the opponent's minor field by blocks represented by the boundary movement distance.

After step S31 or if it is not necessary to move the boundary line 202 in step S30, control goes to step S32 (see FIG. 23) in which the array determining means 332 determines the array of blocks in the game player's minor field 204 and the array of blocks in the opponent's minor field 204 based on the data of the blocks stored in the array data file 330.

If blocks are not stacked up to the highest level of the opponent's minor field 204, i.e., if the opponent's minor field 204 is not full of blocks, in step S33, then control goes to step S34. If blocks are not stacked up to the highest level of the game player's minor field 204, i. e., if the game player's minor field 204 is not full of blocks, in step S34, then control goes to step S35 which determines whether there is a request to end the program executed by the game executing means 300 (the turning-off of the power supply, the pressing of a reset switch, or the switching to a menu image) or not. If there is no request to end the program, control goes back to step S2 and the processing of and after step S2 is repeated. If there is a request to end the program in step S35, then the processing operation of the game executing means 300 is brought to an end.

If the game player's minor field 204 is full of blocks in step S34, then control goes to step S36 in which a game over is processed, and then the processing operation of the game executing means 300 comes an end. If the opponent's minor field 204 is full of blocks in step S33, then control goes to step S37 in which the game player's win is processed, e.g., the total attack point SAP is displayed and the game player's winning gesture is displayed, after which the processing operation of the game executing means 300 comes an end.

The above function (the game executing means 300) performed by the entertainment apparatus 12 has the boundary line displaying means 302 for displaying the boundary line 202 which virtually crosses the virtual field 200 displayed on the display monitor 18 and divides the virtual field 200 into a plurality of minor fields 204, the block developing means 304 for developing a plurality of block images B1, B2, ··· in the minor fields 204, and the block changing means 306 for changing at least one of the block images B1, B2, ··· developed in the virtual field 200 including the minor fields 204 according to predetermined rules. If the development of the block images B1, B2, ··· into each of the minor fields 204 constitutes one stage of operation, then the block images are changed in at least two stages. Consequently, the user can enjoy various changing patterns of the block images B1, B2, ···. If the entertainment apparatus 12 is applied to play a video game, then the user can enjoy various developments of the video game.

Since the boundary line 202 is virtually displayed, the boundary line 202 can be moved as desired in the virtual field 200. If the entertainment apparatus 12 is applied to play a video game in which the boundary line 202 is used, then the user can enjoy unexpected developments of the video game.

In the illustrated embodiment, the game executing means 300 has the message outputting means 310 for displaying a message depending on manual control data in or out of the virtual field 200 displayed on the display monitor 18. Therefore, the user can output the message in visible and audible forms on the display monitor 18 during the game, making the game interesting.

In the illustrated embodiment, the entertainment apparatus 12 is applied to play a video game in which falling blocks are moved to eliminate blocks. However, the principles of the present invention are also applicable to other applications, for example a combat game in which characters fight against each other, a war simulation game, etc. Since the boundary line is movable, unexpected game developments may be introduced in these combat and war simulation games, so that the user will find the games interesting.

Although a certain preferred embodiment of the present invention has been shown and described in detail, it will be understood that various changes and modifications may be made therein without departing from the scope of the invention.

**Claims**

1. An entertainment system comprising:

    a display monitor (18) for displaying a virtual field (200) and a plurality of block images (B1, B2) developed in the virtual field (200); and
    block changing means (306) for changing at least one of the displayed block images (B1, B2) according to a predetermined rule in at least two stages, said block changing means (306) comprising means for developing the block images (B1, B2) in the virtual field (200) in one of said stages.

2. An entertainment system according to claim 1, wherein said block changing means (306) comprises means for developing the block images (B1, B2) in the virtual field (200) by introducing the block images (B1, B2) into the virtual field (200).

3. An entertainment system according to claim 1 or 2, wherein said predetermined rule includes a condition to be satisfied in which of block images (B1, B2) of different types developed in said virtual field (200), block images (B1, B2) of at least one of the same types are positioned adjacent to each other.

4. An entertainment system according to any one of claims 1 to 3, wherein said predetermined rule includes a condition to be satisfied in which a manual input action for inhibiting said block images (B1, B2) from being changed is not entered.

5. An entertainment system according to any one of claims 1 to 4, wherein said block changing means (306) comprises means for changing the displayed block images (B1, B2) by eliminating displayed block images (B1, B2).

6. An entertainment system according to claim 5, wherein when the displayed block images (B1, B2) are eliminated, remaining block images (B1, B2) are rearranged into new arrays of block images (B1, B2), and the elimination of new block images (B1, B2) from the new arrays of block images (B1, B2) is defined as a chain, and wherein said block changing means (306) comprises means for changing a ratio at which differently changing block images (B1, B2) are developed in said virtual field (200), depending on at least the number of chains.

7. An entertainment system according to any one of claims 1 to 6, wherein said block changing means (306) comprises means for changing the displayed block images (B1, B2) by making less visible the displayed block images (B1, B2).

8. An entertainment system comprising:

    a display monitor (18) for displaying a virtual field (200); and
    boundary line displaying means (302) for displaying a boundary line image (202) which virtually crosses said virtual field (200).

9. An entertainment system according to claim 8, wherein said boundary line displaying means (302) comprises means for moving said boundary line image (202) when a predetermined condition is satisfied.

10. An entertainment system according to claim 9, wherein said boundary line displaying means (302) comprises means for changing a distance by which said boundary line image (202) moves depending on the extent to which said condition is achieved.

11. An entertainment system comprising:

a display monitor (18) for displaying a virtual field (200);
boundary line displaying means (302) for displaying a boundary line image (202) which virtually crosses said virtual field (200) and divides said virtual field (200) into a plurality of minor fields (204);
block developing means (304) for developing a plurality of block images (B1, B2) in said virtual field (200) including said minor fields (204); and
block changing means (306) for changing at least one of the displayed block images (B1, B2) according to a predetermined rule in at least two stages, said block changing means (306) comprising means for developing the block images (B1, B2) in the minor fields (204) in one of said stages.

12. An entertainment system according to claim 11, wherein said block changing means (306) comprises means for developing the block images (B1, B2) in the minor fields (204) by introducing the block images (B1, B2) into the virtual field (200).

13. An entertainment system according to claim 11 or 12, wherein said predetermined rule includes a condition to be satisfied in which of block images (B1, B2) of different types developed in said virtual field (200), block images (B1, B2) of at least one of the same types are positioned adjacent to each other.

14. An entertainment system according to any one of claims 11 to 13, wherein said predetermined rule includes a condition to be satisfied in which a manual input action for inhibiting said block images (B1, B2) from being changed is not entered.

15. An entertainment system according to any one of claims 11 to 14, wherein said block changing means (306) comprises means for changing the displayed block images (B1, B2) by eliminating displayed block images (B1, B2).

16. An entertainment system according to claim 15, wherein when the displayed block images (B1, B2) are eliminated, remaining block images (B1, B2) are rearranged into new arrays of block images (B1, B2), and the elimination of new block images (B1, B2) from the new arrays of block images (B1, B2) is defined as a chain, and wherein said block changing means (306) comprises means for changing a ratio at which differently changing block images (B1, B2) are developed in said virtual field (200), depending on at least the number of chains.

17. An entertainment system according to any one of claims 11 to 16, wherein said block changing means (306) comprises means for changing the displayed block images (B1, B2) by making less visible the displayed block images (B1, B2) developed in said virtual field (200).

18. An entertainment system according to any one of claims 11 to 17, wherein said boundary line displaying means (302) comprises means for moving said boundary line image (202) when a predetermined condition is satisfied.

19. An entertainment system according to claim 18, wherein said boundary line displaying means (302) comprises means for changing a distance by which said boundary line image (202) moves depending on the extent to which said condition is achieved.

20. An entertainment system comprising:

a display monitor (18) for displaying a virtual field (200); and
message outputting means (310) for displaying a message depending on a manual input action in or out of displayed the virtual field (200).

21. An entertainment system according to claim 20, wherein said message outputting means (310) comprises means for displaying said message in a manner to be uttered by character images (C1 - C7) displayed in or out of said virtual field (200).

22. An entertainment system according to claim 21, wherein said message outputting means (310) comprises means for animating said character images (C1 - C7).

23. An entertainment system according to any one of claims 20 to 22, wherein said message outputting means (310) comprises means for outputting said message as sound.

24. An entertainment apparatus allowing a display monitor to be connected, the display monitor displaying a virtual field (200) and a plurality of block images (B1,B2) developed in the virtual field(200), comprising:

block changing means (306) for changing at least one of the displayed block images (B1, B2) according to a predetermined rule in at least two stages, said block changing means (306) comprising means for developing the block images (B1, B2) in the virtual field (200) in one of said stages.

25. An entertainment apparatus allowing a display monitor to be connected, the display monitor displaying a virtual field (200), comprising:

boundary line displaying means (302) for displaying a boundary line image (202) which virtually crosses said virtual field (200).

26. An entertainment apparatus allowing a display monitor to be connected, the display monitor displaying a virtual field (200), comprising:

boundary line displaying means (302) for displaying a boundary line image (202) which virtually crosses said virtual field (200) and divides said virtual field (200) into a plurality of minor fields (204);
block developing means (304) for developing a plurality of block images (B1, B2) in said virtual field (200) including said minor fields (204); and block changing means (306) for changing at least one of the displayed block images (B1, B2) according to a predetermined rule in at least two stages, said block changing means (306) comprising means for developing the block images (B1, B2) in the minor fields (204) in one of said stages.

27. An entertainment apparatus allowing a display monitor to be connected, the display monitor displaying a virtual field (200), comprising:

message outputting means (310) for displaying a message depending on a manual input action in or out of displayed the virtual field (200).

28. A recording medium which stores a program comprising the steps of:

displaying a virtual field (200) on a display monitor (18) and a plurality of block images (B1, B2) developed in the virtual field (200); and changing at least one of the displayed block images (B1, B2) according to a predetermined rule in at least two stages, with the block images (B1, B2) being developed in the virtual field (200) in one of said stages.

29. A recording medium according to claim 28, further comprising the step of developing said block images (B1, B2) in the virtual field (200) by introducing the block images (B1, B2) into the virtual field (200).

30. A recording medium according to claim 28 or 29, wherein said predetermined rule includes a condition to be satisfied in which of block images (B1, B2) of different types developed in said virtual field (200), block images (B1, B2) of at least one of the different types are positioned adjacent to each other.

31. A recording medium according to any one of claims 28 to 30, wherein said predetermined rule includes a condition to be satisfied in which a manual input action for inhibiting said block images (B1, B2) from being changed is not entered.

32. A recording medium according to any one of claims 28 to 31, wherein said step of changing at least one of the displayed block images (B1, B2) comprises the step of eliminating displayed block images (B1, B2).

33. A recording medium according to claim 32, wherein when the displayed block images (B1, B2) are eliminated, remaining block images (B1, B2) are rearranged into new arrays of block images (B1, B2), and the elimination of new block images (B1, B2) from the new arrays of block images (B1, B2) is defined as a chain, wherein said step of changing at least one of the displayed block images (B1, B2) comprises the step of changing a ratio at which differently changing block images (B1, B2) are developed in said virtual field (200), depending on at least the number of chains.

34. A recording medium according to any one of claims 28 to 33, wherein said step of changing at least one of the displayed block images (Bl, B2) comprises the step of making less visible the displayed block images (B1, B2).

35. A recording medium which stores a program comprising the step of:

displaying a virtual field (200) on a display monitor (18) and a boundary line image (202) which virtually crosses said virtual field (200).

36. A recording medium according to claim 35, wherein said step of displaying a boundary line image (202) comprises the step of moving said boundary line image (202) when a predetermined condition is satisfied.

37. A recording medium according to claim 36, wherein said step of moving said boundary line image (202) comprises the step of changing a distance by which said boundary line image (202) moves depending on the extent to which said condition is achieved.

38. A recording medium which stores a program comprising the steps of:

> displaying a virtual field (200) and a boundary line image (202) which virtually crosses said virtual field (200) and divides said virtual field (200) into a plurality of minor fields (204);
> developing a plurality of block images (B1, B2) in said virtual field (200) including said minor fields (204); and
> changing at least one of the displayed block images (B1, B2) according to a predetermined rule in at least two stages, with the block images (B1, B2) being developed in the minor fields (204) in one of said stages.

**39.** A recording medium according to claim 38, wherein said step of developing said block images (B1, B2) in the minor fields (204) comprises the step of introducing the block images (B1, B2) into the virtual field (200).

**40.** A recording medium according to claim 38 or 39, wherein said predetermined rule includes a condition to be satisfied in which of block images (B1, B2) of different types developed in said virtual field (200), block images (B1, B2) of at least one of the same types are positioned adjacent to each other.

**41.** A recording medium according to any one of claims 38 to 40, wherein said predetermined rule includes a condition to be satisfied in which a manual input action for inhibiting said block images (B1, B2) from being changed is not entered.

**42.** A recording medium according to any one of claims 38 to 41, wherein said step of changing at least one of the displayed block images (B1, B2) comprises the step of eliminating displayed block images (B1, B2).

**43.** A recording medium according to claim 42, wherein when the displayed block images (B1, B2) are eliminated, remaining block images (B1, B2) are rearranged into new arrays of block images (B1, B2), and the elimination of new block images (B1, B2) from the new arrays of block images (B1, B2) is defined as a chain, wherein said step of changing at least one of the displayed block images (B1, B2) comprises the step of changing a ratio at which differently changing block images (B1, B2) are developed in said virtual field (200), depending on at least the number of chains.

**44.** A recording medium according to any one of claims 38 to 43, wherein said step of changing at least one of the displayed block images (B1, B2) comprises the step of making less visible the displayed block images (B1, B2) developed in said virtual field (200).

**45.** A recording medium according to any one of claims 38 to 44, wherein said step of displaying a boundary line image (202) comprises the step of moving said boundary line image (202) when a predetermined condition is satisfied.

**46.** A recording medium according to claim 45, wherein said step of moving said boundary line image (202) comprises the step of changing a distance by which said boundary line image (202) moves depending on the extent to which said condition is achieved.

**47.** A recording medium which stores a program comprising the steps of:

> displaying a virtual field (200); and
> displaying a message depending on a manual input action in or out of displayed the virtual field (200).

**48.** A recording medium according to claim 47, wherein said step of displaying a message comprises the step of displaying said message in a manner to be uttered by character images (C1 - C7) displayed in or out of said virtual field (200).

**49.** A recording medium according to claim 48, wherein said step of displaying a message comprises the step of animating said character images (C1 - C7).

**50.** A recording medium according to any one of claims 47 to 49, wherein said step of displaying a message comprises the step of outputting said message as sound.

**51.** A program readable and executable by a computer for use in an entertainment apparatus (12) to which a manual controller (16) for outputting a manual control request from the user and a display monitor (18) for displaying images can be connected, said program having the step of:

> changing at least one of a plurality of blocks (B1, B2) developed in a virtual field (200) displayed on said display monitor (18), according to a predetermined rule in at least two stages, with the block images (B1, B2) being developed in the virtual field (200) in one of said stages.

**52.** A program readable and executable by a computer for use in an entertainment apparatus (12) to which a manual controller (16) for outputting a manual control request from the user and a display monitor (18) for displaying images can be connected, said program having the step of:

> displaying a virtual field (200) on the display monitor (18) and a boundary line image (202) which virtually crosses said virtual field (200).

**53.** A program readable and executable by a computer for use in an entertainment apparatus (12) to which a manual controller (16) for outputting a manual control request from the user and a display monitor (18) for displaying images can be connected, said program having the steps of:

> displaying a virtual field (200) and a boundary line image (202) which virtually crosses said virtual field (200) and divides said virtual field (200) into a plurality of minor fields (204); developing a plurality of block images (B1, B2) in said minor fields (204); and changing at least one of the displayed block images (B1, B2) according to a predetermined rule in at least two stages, with the block images (B1, B2) being developed in the virtual field (200) in one of said stages.

FIG. 1

EP 1 044 706 A2

# F I G. 2

# F I G.3

EP 1 044 706 A2

F I G. 4

22

# F I G. 5

# FIG. 6

EP 1 044 706 A2

FIG. 7

FIG. 8

300

FIG. 8 — Block diagram (300): Message Table (360), Message Output Means (362), Sound Output Means (364), Image Combining Means (312), Display Monitor (18, 310), Character Display Means (346), Determining Means (336), Array Determining Means (332), Array Data File (330), Block Development Display Means (322), Boundary Display Means (352), Block Changing Means (334), Distance Receiving Means (350), Character Data File (342), Character Selecting Means (344), Sequence Data (340), Block Image File (324), Block Supply Means (320), Random Number Generating Means (326), Manual Controller (16), sections 302, 304, 306, 308, 310.

FIG. 9

FIG. 10A  FIG. 10B  FIG. 10C  FIG. 10D  FIG. 10E  FIG. 10F

△BUTTON
PRESSED

△BUTTON
RELEASED

ELIMINATED
(1ST CHAIN)

ELIMINATED
(2ND CHAIN)

ELIMINATED
(3RD CHAIN)

EP 1 044 706 A2

FIG. 11

FIG. 12A    FIG. 12B    FIG. 12C

B1

B3

B1

B2

B1

B2

ELIMINATED
(1ST CHAIN)

B2

B1

B2

FIG. 13

# F I G. 14A

# F I G. 14B

# FIG. 15A

# FIG. 15B

# FIG. 16A

# FIG. 16B

# F I G. 17A

# F I G. 17B

# FIG. 18A

# FIG. 18B

## FIG. 19A

## FIG. 19B

# FIG. 20

START

SEP←0
SAP←0
i←0                                    S1

④ →

READ BLOCK ATTRIBUTES
FROM ARRAY DATA FILE                   S2

DISPLAY BLOCKS
DEVELOPED IN MINOR
FIELDS                                 S3

GENERATE RANDOM MEMBER                 S4

READ IMAGE DATA OF PAIR
OF BLOCKS                              S5

DISPLAY IMAGES OF PAIR
OF BLOCKS                              S6

i←i+2                                  S7

DISPLAY MOVEMENT OF
PAIR OF BLOCKS
ACCORDING TO MANUAL
INPUT                                  S8

S9
DROPPED ?                NO

YES

S10
△ BUTTON ?               YES

NO

①

REGISTER DROPPED BLOCK
ARRAY IN ARRAY DATA
FILE                                   S11

③

# FIG. 21

( 1 )

| | |
|---|---|
| CHANGE BLOCK B1 TO BLOCK B2 | S12 |
| DISPLAY BLOCK CHANGE | S13 |
| $j \leftarrow 0, k \leftarrow 0$ | S14 |
| DETERMINE BLOCK ARRAY | S15 |

S16

CHAIN ?  NO ( 2 )

YES

| | |
|---|---|
| ERASE DATA OF BLOCK B2 IN CHAIN | S17 |
| DISPLAY ERASURE OF BLOCK B2 IN CHAIN | S18 |
| UPDATE ERASED BLOCK NUMBER k | S19 |
| $j \leftarrow j+1$ | S20 |

# FIG. 22

( 2 )

| | |
|---|---|
| EXECUTE DETERMINING PROCESS | S21 |

| | |
|---|---|
| SAP←SAP+AP | S22 |

S23

STONE EGG ? —— NO

YES

| | |
|---|---|
| i←i+NUMBER OF STONE EGGS | S24 |

| | |
|---|---|
| READ IMAGE DATA OF STONE EGGS | S25 |

| | |
|---|---|
| DISPLAY STONE EGGS | S26 |

| | |
|---|---|
| REWRITE ARRAY DATA FILE | S27 |

S28

HARASSMENT ? —— NO

YES

| | |
|---|---|
| DISPLAY HARASSMENT DEPENDING ON CHARACTER | S29 |

S30

BOUNDARY ? —— NO

YES

| | |
|---|---|
| DISPLAY BOUNDARY MOVEMENT | S31 |

( 3 )

EP 1 044 706 A2

FIG. 23

③

DETERMINE BLOCK ARRAY    S32

S33

IS OPPONENT'S MINOR FIELD FULL ?    —— YES ——

NO

S34

IS PLAYER'S FIELD FULL ?    —— YES ——

NO

S35    —— NO ——→ ④

FINISHED ?

YES

PROCESS GAME OVER    S36

PROCESS PLAYER'S WIN    S37

END

# FIG. 24

| AP | CHARACTER 1 | | | CHARACTER 2 | | | CHARACTER 3 | | | CHARACTER 4 | | | CHARACTER 5 | | | CHARACTER 6 | | |
|---|---|---|---|---|---|---|---|---|---|---|---|---|---|---|---|---|---|---|
| | S | H | B | S | H | B | S | H | B | S | H | B | S | H | B | S | H | B |
| 0 | 0 | 0 | 0 | 0 | 0 | 0 | 0 | 0 | 0 | 0 | 0 | 0 | 0 | 0 | 0 | 0 | 0 | 0 |
| 5 | 0 | 0 | 7 | 0 | 0 | 7 | 0 | 0 | 11 | 0 | 0 | 3 | 0 | 0 | 7 | 0 | 0 | 8 |
| 7 | 4 | 0 | 7 | 4 | 0 | 7 | 6 | 0 | 11 | 2 | 0 | 3 | 3 | 2 | 7 | 3 | 0 | 8 |
| 9 | 5 | 0 | 7 | 5 | 0 | 7 | 7 | 0 | 11 | 2 | 0 | 3 | 4 | 2 | 7 | 4 | 0 | 8 |
| 11 | 6 | 0 | 7 | 6 | 0 | 7 | 8 | 0 | 11 | 3 | 0 | 3 | 5 | 2 | 7 | 5 | 0 | 8 |
| 13 | 7 | 0 | 7 | 7 | 0 | 7 | 9 | 0 | 11 | 4 | 0 | 3 | 6 | 2 | 7 | 6 | 0 | 8 |
| ⋮ | | | | | | | | | | | | | | | | | | |
| 100 | 20 | 1 | 7 | 16 | 7 | 7 | 14 | 6 | 11 | 14 | 6 | 3 | 15 | 8 | 7 | 15 | 7 | 8 |
| ⋮ | | | | | | | | | | | | | | | | | | |
| 999 | 50 | 1 | 7 | 40 | 8 | 7 | 40 | 8 | 11 | 40 | 8 | 3 | 40 | 8 | 7 | 40 | 8 | 8 |

S · · · NUMBER OF STONE EGGS

H · · · HARASSMENT LEVEL

B · · · BOUNDARY MOVEMENT DISTANCE

EP 1 044 706 A2